(19) Europäisches Patentamt
European Patent Office
Office européen des brevets

(11) **EP 1 574 752 B1**

(12) **EUROPEAN PATENT SPECIFICATION**

(45) Date of publication and mention
of the grant of the patent:
**06.05.2009 Bulletin 2009/19**

(51) Int Cl.:
***F16H 25/22*** *(2006.01)*

(21) Application number: **05005120.0**

(22) Date of filing: **09.03.2005**

(54) **A ball screw**

Kugelspindel

Vis à billes

(84) Designated Contracting States:
**DE**

(30) Priority: **11.03.2004 JP 2004068550**

(43) Date of publication of application:
**14.09.2005 Bulletin 2005/37**

(73) Proprietor: **NTN Corporation**
**Osaka (JP)**

(72) Inventor: **Shibata, Kiyotake**
**Iwata-shi**
**Shizuoka-ken (JP)**

(74) Representative: **Thielmann, Andreas**
**COHAUSZ & FLORACK**
**Patent- und Rechtsanwälte**
**Bleichstrasse 14**
**40211 Düsseldorf (DE)**

(56) References cited:
**EP-A- 0 092 331**        **US-A- 3 924 486**
**US-A- 4 080 011**        **US-A1- 2003 106 385**
**US-A1- 2003 128 901**

**EP 1 574 752 B1**

**Description**

Field of the Invention

The present invention relates to a ball screw used for various machine tools such as an electrical discharge machine, a tapping center etc. a motor driven power steering in a motor vehicle, and actuators etc. and more particularly to a ball screw in which the frictional efficiency in its actuation is improved.

Description of Background Art

In general, the ball screw comprises a screw shaft formed with a helical screw groove on its outer circumferential surface, a nut fitted on the screw shaft and formed with a helical screw groove on its inner circumferential surface, a plurality of balls contained within a rolling contact passage formed by oppositely arranged screw grooves, and a circulating member forming a circumferentially connecting passage of the rolling contact passage, and is used for example in a motion converting mechanism in which the screw shaft is linearly moved by rotating the nut.

In general, the ball screw includes different types of ball circulating mechanisms and one of which is a "bridge" or piece type. The bridge type ball screw has a connecting passage of screw groove and a "bridge" or piece member for circulation forming a circularly connecting passage of the rolling contact passage is mounted on the nut. The bridge type ball screw advantages in a relatively simple and compact structure.

The ball screw of this type exhibits stable operational characteristics relative to an axial load along the screw shaft applied to the nut as well as a torque applied to the screw shaft if the ball screw is manufactured with a high accuracy. However, in actual, the rolling friction resistance would be varied since errors in a radius of curvature of the circular groove of the ball screw and a lead of the helical screw groove etc. are combined. This would cause reduction of a positioning accuracy and controllability of the ball screw or heat generation due to friction which would in turn reduce the life of the ball screw.

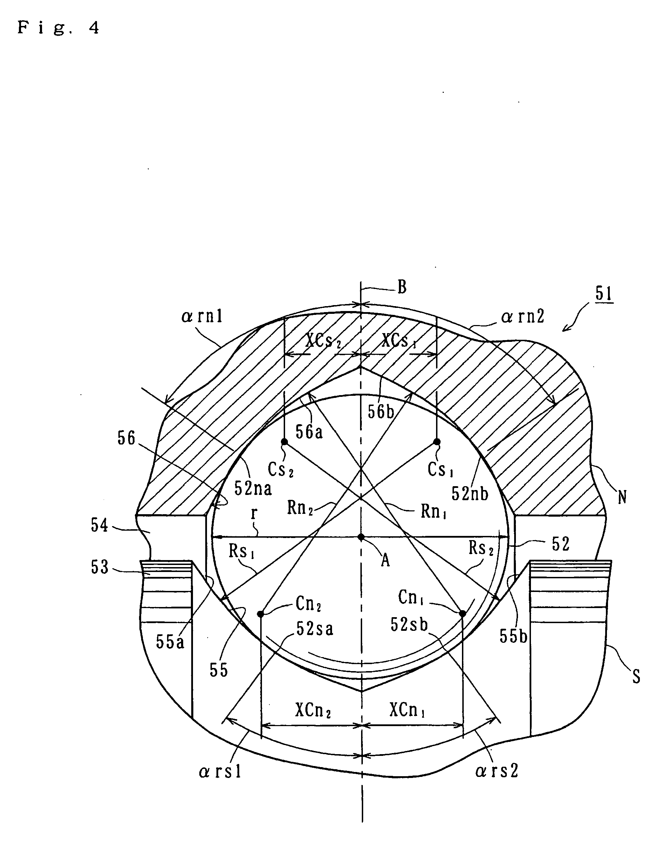

There is known a ball screw shown in Fig. 4 which can solve these problems. The ball screw 51 has a screw shaft "S", a nut "N" and a plurality of balls 52. The screw shaft "S" is formed with a helical screw groove 55 on its outer circumferential surface 53 and the nut "N" is formed with a helical screw groove 56 on its inner circumferential surface and these helical screw grooves 55 and 56 are oppositely arranged. The balls 52 are in rolling contact with the helical screw grooves 55 and 56.

Each of the screw shaft groove 55 and the nut groove 56 has a Gothic arc cross-sectional configuration. If denoting a radius of the ball 52 by "r"; radii of curvature of first circular arcs 55a and 55b forming parts of cross-section of the screw shaft groove 55 by "Rs1" and "Rs2" respectively; distances between a line "B" passing through the center "A" of the ball 52 and perpendicular to the screw shaft "S" and centers "Cs1" and "Cs2" of the radii of curvature "Rs1" and "Rs2" of the first circular arcs "55a" and "55b" by "Xcs1" and "Xcs2" respectively; radii of curvature of second circular arcs 56a and 56b forming parts of cross-section of the nut groove 56 by "Rn1" and "Rn2" respectively; distances between a line "B" passing through the center "A" of the ball 52 and perpendicular to the screw shaft "S" and centers "Cn1" and "Cn2" of the radii of curvature "Rn1" and "Rn2" of the second circular arcs "56a" and "56b" by "Xcn1" and "Xcn2" respectively; angles (contact angles) formed by the line "B" and normal lines passing through contact points "52sa" and "52sb" of the screw shaft groove 55 and the ball 52 by "α rs1" and "α rs2" respectively; and contact angles formed by the line "B" and normal lines passing through contact points "52na" and "52nb" of the nut groove 56 and the ball 52 by "α rn1" and "α rn2" respectively, following relations can be obtained:

$$\sin(\alpha\ rs1)=Xcs1/(Rs1-r)$$

$$\sin(\alpha\ rs2)=Xcs2/(Rs2-r)$$

$$\sin(\alpha\ rn1)=Xcn1/(Rn1-r)$$

$$\sin(\alpha\ rn2)=Xcn2/(Rn2-r)$$

In which since Rs1=Rs2=Rs, Xcs1=Xcs2=XcsRn1=Rn2=Rn, and Xcn1=Xcn2=Xcn, relations α rs1=α rs2 and α rn1=α rn2 can be obtained. The screw shaft groove 55 and the nut groove 56 are formed so that they satisfy a

$$relation-0.1\leq\{Xcs/(Rs-r)-Xcn/(Rn-r)\}<0$$

It is possible to improve the operational efficiency and durability of the ball screw 51 by changing the contact angles of the ball screw 51 i.e. contact angles of balls 52 in rolling contact with the screw shaft groove 55 and the nut groove 56 so as to reduce the rolling friction during conversion of the direction of movement (see Japanese Laid-open Patent Publication No. 172425/2003).

However in such a conventional ball screw 51, it is necessary to change a combination of the contact angle in the screw shaft "S" and the nut "N" according to whether the ball screw 51 is used in conversion of a linear motion to a rotational motion (hereinafter referred to as "negative operation") or conversion of a rotational motion to a linear motion (hereinafter referred to as "positive operation). It is impossible to improve the operational efficiency in both operational conditions. In general, when the contact angle in the screw shaft and the nut is changed, although the operational efficiency in either one of the positive operation and negative operation would be improved, the other would be reduced.

For example in a case of a ball screw used in a motor driven power steering, both forces from a pinion and tires are applied to the ball screw and the magnitude and direction of them are always different in accordance with the surface condition of a road and the operation of a steering wheel. On the contrary, whether the steering wheel should be rotated in any direction is determined only based on judgement of a driver. That is, the nut "N" would be possibly rotated in either direction relative to the direction of force applied to the ball screw 51 and thus the ball screw 51 also would be possibly caused operations either in positive and negative directions. Accordingly, it is difficult in the conventional ball screw 51 to improve the general operational efficiency both in the positive and negative operations by changing the contact angles in the screw shaft "S" and the nut "N".

A ball screw according to the preamble of claim 1 is described in US-A-4 080 011. This kind of ball screw has a screw groove of the screw shaft having a depth being between 0.20 and 0.30 times the diameter of the ball.

It is a drawback of the known ball screw that in general riding of the balls across the shoulder of the screw groove can not be prevented.

SUMMARY OF THE INVENTION

It is, therefore, an object of the present invention to provide a ball screw which securely prevents the ball from riding across the shoulder of the screw groove.

For achieving the object above, there is provided according to the present invention of claim 1, a ball screw comprising a screw shaft formed with a helical screw groove on its outer circumferential surface, a nut fitted on the screw shaft and formed with a helical screw groove on its inner circumferential surface, a plurality of balls contained within a rolling contact passage formed by oppositely arranged screw grooves, a circulating member forming a circumferentially connecting passage of the rolling contact passage and a ratio "t/d" of the depth "t" of screw groove of the screw shaft to the ball diameter "d" is set at a range 0.20 - 0.30, characterized in that an initial contact angle a between the ball and the srew groove is set at $\alpha$ range 25 ~ 40°.

According to the invention of claim 1, since the ratio "t/d" of the depth "t" of screw groove of the screw shaft to the ball diameter "d" is at a range 0.20 ~ 0.30, it is possible to provide a ball screw which can reduce the general mechanical loss and has a high operational efficiency both in the positive and negative operations. Thus it is also possible to improve the accuracy in the positioning of the ball screw and controllability thereof and to reduce heat generation due to friction and thus the life of the ball screw.

Further, since an initial contact angle $\alpha$ between the ball and the screw groove is set at a range 25 ~ 40°, it is possible to prevent the contact ellipse of the ball from riding across a shoulder of the screw groove as well as to prevent the reduction of a load capacity.

According to the invention of claim 2, since said circulating member comprises a bridge member having a connecting groove for connecting the screw groove of screw shaft by a distance of one circumferential length between adjacent screw grooves, it is possible to reduce the frictional resistance when the balls travel to the bridge member passing over a distance of one circumferential length and thus to reduce the mechanical loss of the ball screw.

According to the invention of claim 3, since a relation between the ball diameter "d" and the lead "L" of screw groove is set as d=(0.75 ~ 1.10) L, it is possible to prevent the contact ellipse of the ball from riding across a shoulder of the screw groove as well as to improve the operational efficiency of the ball screw and to reduce the coefficient of friction.

Preferably as defined in claim 4, said screw groove of screw shaft may be formed by rolling. According to the ball screw of the present invention, since the depth of the screw groove is formed smaller than that of the conventional screw groove, it is possible to improve the productivity of the ball screw and thus to reduce its manufacturing cost.

Preferably as defined in claim 5, if the surface of screw groove is superfinished so that its surface roughness "Ra" is less than 0.1 and its undulation in rolling movement direction is less than 2 $\mu$m, it is possible not only to obtain a desirable surface roughness but to improve the roundness at the contact point of the screw groove and the ball and thus its undulation components and accordingly to further improve the operational efficiency of the ball screw as well to reduce the coefficient of friction.

According to the ball screw of the present invention, it comprises a screw shaft formed with a helical screw groove on its outer circumferential surface, a nut fitted on the screw shaft and formed with a helical screw groove on its inner circumferential surface, a plurality of balls contained within a rolling contact passage formed by oppositely arranged screw grooves, and a circulating member forming a circumferentially connecting passage of the rolling contact passage, and is characterized in that a ratio "t/d" of the depth "t" of screw groove of the screw shaft to the ball diameter "d" is set at a range 0.20 ~ 0.30. Accordingly, it is possible to provide a ball screw which can reduce the general mechanical loss and has a high operational efficiency both in the positive and negative operations. Thus it is also possible to improve the accuracy in the positioning of the ball screw and controllability thereof and to reduce heat generation due to friction and thus the life of the ball screw.

Best mode for carrying out the Invention

The best mode for carrying out the present invention is a ball screw comprising a screw shaft formed with a helical screw groove on its outer circumferential surface, a nut fitted on the screw shaft and formed with a helical screw groove on its inner circumferential surface, a plurality of balls contained within a rolling contact passage formed by oppositely arranged screw grooves, and a circulating member forming a circumferentially connecting passage of the rolling contact passage characterized in that a ratio "t/d" of the depth "t" of screw groove of the screw shaft to the ball diameter "d" is set at a range 0.20 ~ 0.30 and in an initial contact angle $\alpha$ between the ball and the screw groove is set at a range 25 ~ 40°.

BRIEF DESCRIPTION OF THE DRAWINGS

Additional advantages and features of the present invention will become apparent from the subsequent description and the appended claims, taken in conjunction with the accompanying drawings, wherein:

Fig. 1 (a)    is a plan view of a preferred embodiment of the ball screw of the present invention;
Fig. 1 (b)    is a longitudinal section view of the ball screw of Fig. 1 (a);
Fig. 1 (c)    is a perspective view of a bridge member used in the ball screw of Fig. 1 (a);
Fig. 2 (a)    is an explanatory view showing a relation between a screw groove and balls;
Fig. 2 (b)    is an explanatory view similar to Fig. 2 (a) showing a case wherein the depth of the screw groove is made small;
Fig. 2 (c)    is an explanatory view similar to Fig. 2 (a) showing an another case wherein the diameter of the ball is made large;
Fig. 3 (a)    is an explanatory view showing a relation between the initial contact angle and the riding-across of ball on the shoulder of the screw groove;
Fig. 3 (b)    is an explanatory view similar to Fig. 3 (a) showing a case wherein the initial contact angle is made small; and
Fig. 4    is a partially enlarged longitudinal section view of a conventional ball screw.

DESCRIPTION OF THE PREFERRED EMBODIMENTS

A preferred embodiment of the present invention will be hereinafter described.

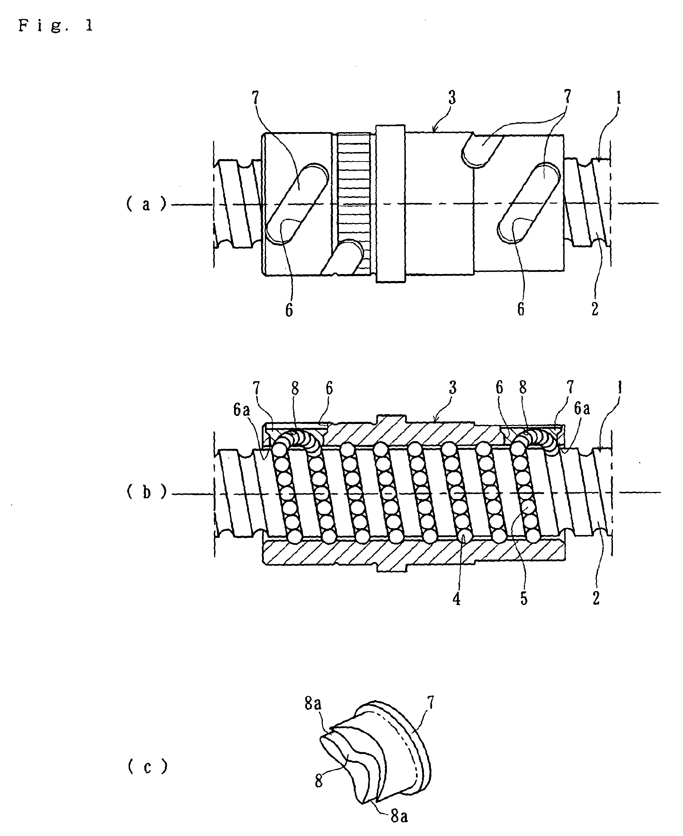

Fig. 1 shows one preferred embodiment of a ball screw of the present invention wherein Fig. 1(a) is a plan view and Fig. 1 (b) is a longitudinal section view thereof, and Fig. 1 (c) is a perspective view of a bridge member forming a circulating member used in the ball screw of the present invention.

A screw shaft 1 is formed with a helical screw groove 2 on its outer circumferential surface, a nut 3 fitted on the screw shaft 1 is formed with a helical screw groove 4 on its inner circumferential surface. And a plurality of balls 5 are contained between the screw grooves 2 and 4.

A barrel of the nut 3 is formed with elliptic bridge windows 6 each passing through the wall of nut 3 and cutting out a portion of the screw groove 4. Each bridge window 6 is fitted with an elliptic bridge member 7. A connecting groove 8 for connecting the screw groove 4 of nut 3 by a distance of one circumferential length between adjacent screw grooves 4 is formed on the inner circumferential surface of the bridge member so that a rolling contact passage of balls 5 is formed by the connecting groove 8 and a portion of substantially one circumferential length of the screw groove 4. The plurality of balls 5 contained in the rolling contact passage formed by the screw grooves 2 and 4 roll along the screw grooves 2 and 4, then are guided into the connecting groove 8 of the bridge member 7, and finally return to an adjacent screw groove 4 riding across the screw thread of the screw shaft 1 and continue rolling motion along the screw grooves 2 and 4.

The connecting groove 8 of the bridge member 7 is formed as having a "S" shaped configuration so as to smoothly connect mutually adjacent screw grooves 4 of the nut 3. Thus the connecting groove 8 of the bridge member 7 is connected to the screw groove 4 so that opened edges 8a at opposite ends of the connecting groove 8 correspond to adjacently arranged opened edge 6a of the screw groove 4 of the nut 3.

The efficiency of ball screw is generally represented by formulae shown below and it is known that the operational efficiency of ball screw is improved by increasing the lead angle β or the initial contact angle α. If denoting the operational efficiency in the positive operation (hereinafter referred to as "positive efficiency") by "Ep", the operational efficiency in the negative operation (hereinafter referred to as "negative efficiency") by "En", the initial contact angle by "α", the mechanical loss in the positive operation by "μ p", and the mechanical loss in the negative operation by "μ n", following formulae can be obtained:

$$Ep=(sin\ \alpha\ -\ \mu\ p\times tan\ \beta)/(sin\ \alpha\ +\ \mu\ p/tan\ \beta)$$

$$En=(sin\ \alpha\ -\ \mu\ n/tan\ \beta)/(sin\ \alpha\ +\ \mu\ n\times tan\ \beta)$$

However the mechanical losses μ p and μ n are included in these formulae of the operational efficiency. In actual, these mechanical losses μ p and μ n become the mechanical loss of whole ball screw including not only a simple frictional coefficient such as the friction between the screw grooves 2 and 4 and balls 5 but a loss of force caused during the advancing roller is pushed by the following roller at a non-load region within the bridge member 7 and a loss caused during the ball 5 rides across the screw groove 2. Accordingly the applicant has noticed a ratio of the depth "t" of screw groove to the ball diameter "d" and verified that the reduction of that ratio enables to reduce the loss when the ball 5 rides across the shoulder of the screw groove 2.

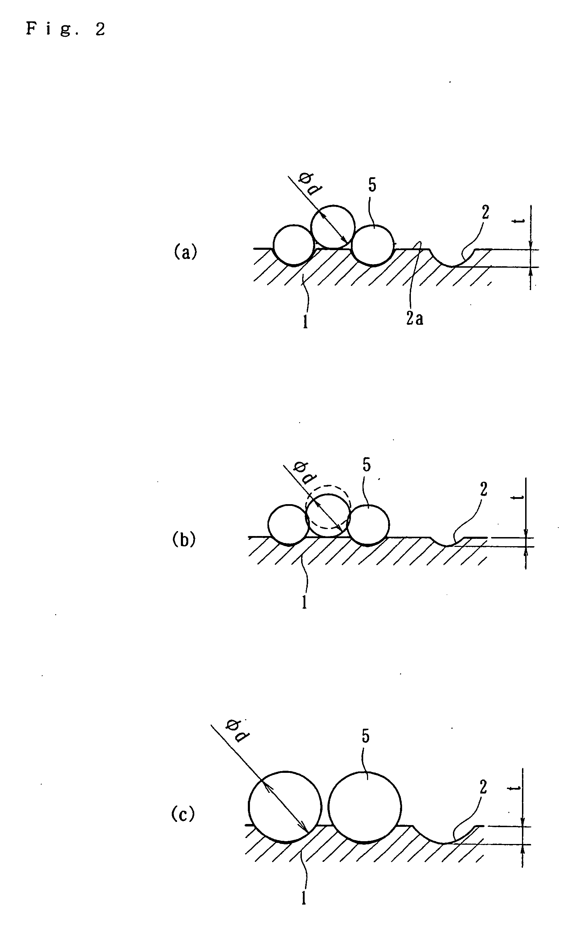

In the ball screw of the present invention, the balls 5 ride across a land 2a between the screw grooves 2 and 2 when the balls 5 are circulated passing through the connecting groove 8 of the bridging member 7 as shown in Fig. 2. In consideration of the operational efficiency and the load capacity, in the embodiment of the present invention, the ratio "t/d" of the depth "t" of the screw groove 2 relative to the diameter "d" of a ball 5 is set at a range 0.20 ~ 0.30 and various experiments were carried out.

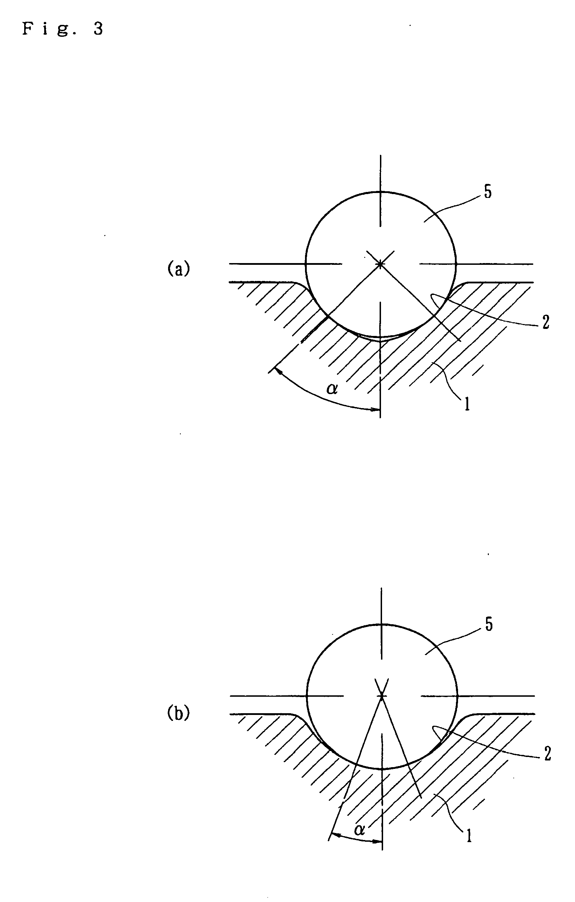

In order to set the ratio (t/d) at a range 0.20 ~ 0.30, it is conceivable to make the depth "t" of the screw groove 2 small or to make the diameter "d" of the ball large, or to make the depth "t" of the screw groove 2 small as well as to make the diameter "d" of the ball large. In this case, if merely making the depth "t" of the screw groove 2 small, the contact ellipse of the ball 5 would ride across the shoulder of the screw groove and thus the load capacity would be reduced. This can be prevented by increasing the diameter "d" of the ball 5 in the relation with the depth "t" of the screw groove 2. It is possible to prevent the contact ellipse of the ball 5 from riding across the shoulder of the screw groove by setting the initial contact angle α of the ball 5 contacting with the screw groove 2 in the relation between the depth "t" of the screw groove 2 and the ball diameter "d" (see Fig. 3). That is, it is possible to prevent the contact ellipse of the ball 5 from riding across the shoulder of the screw groove by setting the initial contact angle α at a range 25 ~ 40° in place of 45° in the prior art.

The applicant has obtained results of tables 1 and 2 by comparing the operational effect of a sample of the ball screw manufactured in accordance with the present invention by setting the ratio "t/d" of the depth "t" of the screw groove 2 relative to the ball diameter "d" small with that of the prior art. The measurement was carried out under conditions of the thrust load of 5.5 kN and the rotation speed of nut of 360 rpm and representative values are shown in tables. Table 1 shows measured result of the positive efficiency and table 2 shows those of the negative efficiency.

Table 1

| | Examples of prior art | | Examples of present invention | |
|---|---|---|---|---|
| t/d | 0.37 | 0.37 | 0.25 | 0.27 |
| Shaft diameter | 28.4 | 27.0 | 27.0 | 29.0 |
| Lead (L) | 6 | 7 | 7 | 7 |
| Lead angle (β) | 3° 43' | 4° 29' | 4° 17' | 3° 56' |
| Ball diameter (d) | 5/32 in | 7/32 in | 7/32 in | 17/64 in |

(continued)

|  | Examples of prior art | | Examples of present invention | |
|---|---|---|---|---|
| Initial contact angle (α) | 45° | 45° | 30° | 30° |
| Calculated efficiency Friction coefficient 0.004 | 92 | 93.2 | 92.9 | 89.5 |
| Efficiency En (results of test) | 92.1 | 94.0 | 95.1 | 94.6 |
| Coefficient of friction | 0.0039 | 0.0035 | 0.0019 | 0.0020 |

Table 2

|  | Examples of prior art | | Examples of present invention | |
|---|---|---|---|---|
| t/d | 0.37 | 0.37 | 0.25 | 0.27 |
| Shaft diameter | 28.4 | 27.0 | 27.0 | 29.0 |
| Lead (L) | 6 | 7 | 7 | 7 |
| Lead angle (β) | 3° 43' | 4° 29' | 4° 17' | 3° 56' |
| Ball diameter (d) | 5/32 in | 7/32 in | 7/32 in | 17/64 in |
| Initial contact angle (α) | 45° | 45° | 30° | 30° |
| Calculated efficiency Friction coefficient 0.004 | 92 | 93.2 | 92.9 | 89.5 |
| Efficiency En (results of test) | 91.5 | 93.6 | 94.9 | 94.3 |
| Coefficient of friction | 0.0039 | 0.0035 | 0.0019 | 0.0020 |

From the general formulae as to the operational efficiency described above, in the prior art, it has been carried out to change the initial contact angle α and the lead angle β to improve the operational efficiency of the ball screw. However if changing the initial contact angle α from 45° to 25 ~ 40° as in the embodiment of the present invention, the operational efficiency is contrary reduced. According to the present invention, it has verified that it is possible not only to improve the operational efficiency but to reduce the coefficient of friction i.e. the mechanical loss of the ball screw by reducing the initial contact angle α as well as the ratio "t/d" that is a ratio of the depth "t" of the screw groove 2 relative to the ball diameter "d" without changing the lead angle β.

In addition according to the present invention, the relation between the diameter "d" of the ball 5 and the lead "L" is set so that it satisfies d=(0.75 ~ 1.10) L. When d<0.75 L, effect of improving the operational efficiency as well as remarkable reduction of the coefficient of friction cannot be noticed, on the contrary, when d>1.10 L, danger of the contact ellipse of ball 5 riding across the shoulder of the screw groove is undesirably increased.

According to the present invention, since the depth "t" of the screw groove 2 relative to the ball diameter "d" is set smaller than that of the ball screw of the prior art, it is possible to achieve a higher productivity and a low manufacturing cost when forming the screw groove 2 by rolling. In addition it has been found that the coefficient of friction of the ball screw can be remarkably reduced by superfinishing the surface of the screw groove 2. This is because that the superfinishing enables not only to obtain a superior surface roughness "Ra" less than 1.0 μm as compared to 1.5 ~ 2.0 μm in the prior art but to improve the roundness at the contact point of the screw groove and the ball and thus its undulation components. The screw groove 2 may be formed in any configuration such as a circular arc circular contacting with the ball 5 other than the gothic arc configuration.

As apparent from above, the present invention can provide a ball screw which can reduce whole mechanical loss in the ball screw of high efficiency either in the positive and negative efficiency by setting the ratio "t/d". Accordingly it is also possible to improve the accuracy in the positioning of the ball screw and controllability thereof and to reduce heat generation due to friction and thus the life of the ball screw.

The ball screw according to the present invention can be applied to a motor driven power steering for motor vehicle etc. in which positive and negative operations might be caused during its use. The circulating member is not limited to the bridge member and can be formed by a return tube, an end plate etc.

The present invention has been described with reference to the preferred embodiment. Obviously, modifications and alternations will occur to those of ordinary skill in the art upon reading and understanding the preceding detailed description.

**Claims**

1.  A ball screw comprising a screw shaft (1) formed with a helical screw groove (2) on its outer circumferential surface, a nut (3) fitted on the screw shaft (1) and formed with a helical screw groove (4) on its inner circumferential surface, a plurality of balls (5) contained within a rolling contact passage formed by oppositely arranged screw grooves (2 and 4), a circulating member forming a circumferentially connecting passage of the rolling contact passage, and a ratio (t/d) of the depth "t" of screw groove (2) of the screw shaft to the ball diameter "d" is set at a range 0.20 ~ 0.30, charaterized in that an initial contact angle ($\alpha$) between the ball (5) and the screw groove (2) is set at a range 25 ~ 40°.

2.  A ball screw of claim 1 wherein said circulating member comprises a bridge member having a connecting groove for connecting the screw groove (2) of screw shaft (1) by a distance of one circumferential length between adjacent screw grooves.

3.  A ball screw of claim 1 or 2 wherein a relation between the ball diameter "d" and the lead "L" of screw groove (2) is set as d=(0.75 ~ 1.10) L.

4.  A ball screw of any one of claims 1 to 3 wherein said screw groove (2) of screw shaft (1) is formed by rolling.

5.  A ball screw of any one of claims 1 to 4 wherein the surface of screw groove (2 or 4) is superfinished so that its surface roughness "Ra" is less than 0.1 and its undulation in rolling movement direction is less than 2 $\mu$m.

**Patentansprüche**

1.  Kugelspindel, umfassend eine Spindelwelle (1), die mit einer spiralförmigen Spindelnut (2) auf ihrer äußeren Umfangsfläche ausgebildet ist; eine Mutter (3), die auf die Spindelwelle (1) gepasst ist und mit einer spiralförmigen Spindelnut (4) auf ihrer inneren Umfangsfläche ausgebildet ist; mehrere Kugeln (5), die in einem Walzkontaktdurchgang enthalten sind, welcher durch gegenüberliegend angeordnete Spindelnute (2, 4) ausgebildet ist; ein Umlaufglied, das einen umfänglich verbindenden Durchgang des Walzkontaktdurchgangs ausbildet, und wobei ein Verhältnis (t/d) der Tiefe "t" der Spindelnut (2) der Spindelwelle zum Kugeldurchmesser "d" in einem Bereich von 0,20 bis 0,30 eingerichtet ist, **dadurch gekennzeichnet, dass** ein anfänglicher Kontaktwinkel ($\alpha$) zwischen der Kugel (5) und der Spindelnut (2) in einem Bereich von 25° bis 40° eingerichtet ist.

2.  Kugelspindel nach Anspruch 1, wobei das Umlaufglied ein Brückenglied mit einer Verbindungsnut zum Verbinden der Spindelnut (2) der Spindelwelle (1) über einen Abstand von einer Umfangslänge zwischen benachbarten Spindelnuten umfasst.

3.  Kugelspindel nach einem der Ansprüche 1 oder 2, wobei eine Beziehung zwischen dem Kugeldurchmesser "d" und der Steigung "L" der Spindelnut (2) als d = (0,75 bis 1,10) x L eingerichtet ist.

4.  Kugelspindel nach einem der Ansprüche 1 bis 3, wobei die Spindelnut (2) der Spindelwelle (1) durch Walzen ausgebildet ist.

5.  Kugelspindel nach einem der Ansprüche 1 bis 4, wobei die Oberfläche der Spindelnut (2, 4) derart feinstbearbeitet ist, dass ihre Rauheit "Ra" geringer als 0,1 und ihre Welligkeit in der Walzbewegungsrichtung geringer als 2 $\mu$m ist.

**Revendications**

1.  Vis à billes comprenant une tige de vis (1) formée avec une gorge de vis hélicoïdale (2) à sa surface périphérique externe, un écrou (3) ajusté sur la tige de vis (1) et formé avec une gorge de vis hélicoïdale (4) à sa surface périphérique interne, plusieurs billes (5) contenues dans un passage de contact à roulement formé par des gorges de vis opposées (2, 4), un organe de recirculation formant un passage de liaison périphérique du passage de contact à roulement, et un rapport (t/d) de la profondeur "t" de la gorge de vis (2) de la tige de vis, au diamètre "d" des billes est fixé dans un intervalle de 0,20 ~ 0,30, **caractérisé en ce qu'**un angle de contact initial ($\alpha$) entre les billes (5) et la gorge de vis (2) est fixé dans un intervalle de 25° ~ 40°.

2.  Vis à billes selon la revendication 1, dans laquelle ledit organe de recirculation comprend un organe en pont présentant une gorge de liaison pour relier la gorge de vis (2) de la tige de vis (1) à une distance d'une longueur périphérique entre gorges de vis adjacentes.

3. Vis à billes selon la revendication 1 ou 2, dans laquelle un rapport entre le diamètre "d" des billes et le pas "L" de la gorge de vis (2) est fixé à d=(0,75 ~ 1,10) x L.

4. Vis à billes selon l'une quelconque des revendications 1 à 3, dans laquelle ladite gorge de vis (2) de la tige de vis (1) est formée par roulage.

5. Vis à billes selon l'une quelconque des revendications 1 à 4, dans laquelle la surface de la gorge de vis (2, 4) est superfinie de telle sorte que sa rugosité de surface "Ra" soit inférieure à 0,1, et que son ondulation dans la direction du mouvement de roulement soit inférieure à 2 μm.

Fig. 1

(a)

(b)

(c)

F i g .  2

(a)

(b)

(c)

F i g . 3

(a)

(b)

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003172425 A

- US 4080011 A